Europäisches Patentamt

European Patent Office

Office européen des brevets

(11) Publication number: **0 322 893**
**A2**

## (12) EUROPEAN PATENT APPLICATION

(21) Application number: 88121791.3

(51) Int. Cl.⁴: **H04B 9/00**

(22) Date of filing: **28.12.88**

(30) Priority: **29.12.87 JP 336019/88**

(43) Date of publication of application:
**05.07.89 Bulletin 89/27**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Shibutani, Makoto**
**c/o NEC Corporation 33-1, Shiba 5-chome**
**Minato-ku Tokyo(JP)**
Inventor: **Yamazaki, Shuntaro**
**c/o NEC Corporation 33-1, Shiba 5-chome**
**Minato-ku Tokyo(JP)**

(74) Representative: **Vossius & Partner**
**Siebertstrasse 4 P.O. Box 86 07 67**
**D-8000 München 86(DE)**

(54) A polarization diversity optical receiving apparatus.

(57) In a polarization diversity optical receiving apparatus, signal light is first divided in a polarization separating portion (7) into two signal lights having polarizations orthogonal to each other. Then, the two signal lights are combined with local oscillation lights having polarizations which are coincided with that of a corresponding one of the two signal lights. This results in the reduction of the number of polarization separating portions.

FIG. 1

## A POLARIZATION DIVERSITY OPTICAL RECEIVING APPARATUS

The invention relates to a polarization diversity optical receiving apparatus applied to an optical communication system, an optical instrumentation system etc. in which an optical heterodyne detection or an optical homodyne detection is adopted.

In general, an optical heterodyne detection system has an advantage that a receiving sensitivity can be 10 to 100 times that of a conventional optical direct detection system. Therefore, the optical heterodyne detection system is an advantageous optical detection system which is effective for a long distance optical communication trunk system, a high sensitivity optical sensor etc.

In the optical heterodyne detection system, it is necessary to combine signal light and local oscillation light with a high efficiency, thereby resulting in a high receiving sensitivity. For this purpose, propagating directions, polarizations, light beam diameters etc. must be coincided with each other between signal light and local oscillation light. In a practical use, an optical fiber coupler is used as an optical combiner in which propagating directions and light beam diameter are coincided with each other with a low loss between signal light and local oscillation light. At the same time, an appropriate means must be provided for constantly coinciding polarizations thereof because polarization of signal light which is propagated through a long distance optical fiber is changed in regard to time due to external disturbances applied to the optical fiber in an optical communication system, and because polarization of signal light is also changed dependent on a state of an obj ect article to be measured in an optical instrumentation system.

One of following three measures is considered to be adopted for the aforementioned appropriate means. The first one is to use a polarization maintaining optical fiber through which signal light is propagated with little change of palarization. The second one is an apparatus in which polarization of signal light or local oscillation light is controlled to coincide polarizations of signal and local oscillation lights by monitoring the polarization of the signal light. The third one is a polarization diversity optical receiving apparatus to which the invention relates. In the polarization diversity optical receiving apparatus, signal light and local oscillation light are combined in an optical combiner, light thus combined is supplied to a polarization separating means in which two lineary polarized light beams having polarizations orthogonal to each other are separated, and the two light beams are converted in two separate photodetectors to two electric signals, which are then processed to be combined in a signal processing circuit. As a result, signal loss is prevented from being produced because signal light components and local oscillation light components of the two lineary polarized light beams have lineary polarizations and are coincident in polarizations.

In an optical heterodyne detection system and an optical homodyne detection system, a receiving sensitivity is increased in accordance with the increase of a power of local oscillation light. Usually, however, a degradation of the receiving sensitivity is induced due to a shot noise limitation which is an ultimate receiving sensitivity limitation in the optical heterodyne detection system and the optical homodyne detection system because laser light includes noise of light intensity. In order to overcome this disadvantage, a balanced receiver has been proposed as described on pages 177 to 179 of "Optics Letters, Vol. 8, No. 3, March 1983" by H.P. Yuen.

The balanced receiver comprises an optical directional coupler having input and output ports of 2 x 2, two photodetectors each converting light signal to electric signal, and a circuit for differentially combining output signals of the two photodetectors.

In operation, combined lights of signal light and local oscillation light are obtained at the two output ports of the optical coupler, and then supplied to the two photodetectors separately. Thus, beat component of the signal light and the local oscillation light, and intensity noise and shot noise components of the local oscillation light are obtained at the outputs of the photodetectors, respectively. Among these output components, the beat components are out of phase, while the intensity noise components are in-phase. As a result, the beat signal components are supplied from the differentially combining circuit, and the intensity noise components are cancelled therein.

As explained above, it is preferable that a balanced receiver is applied to a polarization diversity optical receiving apparatus because a degradation of a receiving sensitivity caused by intensity noise of local oscillation light is suppressed.

A conventional polarization diversity optical receiving apparatus utilizing a balanced receiver is described on pages 407 to 410 of "IOOC-ECOC'86, Technical Digest, Vol. 1, 1986" by H. Kuwahara et al. In the conventional polarization diversity optical receiving apparatus, signal light and local oscillation light are combined in an optical directional coupler. Two output lights of the optical directional coupler are separated in polarizations, respectively, to produce four polarization-separated light beams. Finally, the four light beams are supplied to a balanced receiver type optical receiving apparatus.

In the conventional polarization diversity optical receiving apparatus, however, there is a disadvantage that a construction is complicated because two polarization separating portions are required to be provided.

Where a polarizing beam splitter or a polarizing prism is used in the polarization separating portion, especially, light supplied from a terminal end of an optical fiber must be collimated to couple effectively to the polarizing beam splitter or prism by use of a lens. This results in a complicated construction and a difficult optical adjustment in the polarization separating portion. This results in a further disadvantage that a light source for a transmitter and/or a local oscillation light is badly affected by light propagated in the reverse direction which is produced in accordance with reflections of light at the terminal end of the optical fiber, the collimating lens, the polarizing beam splitter or prism etc. in the polarization separating portion.

Where an optical fiber type polarizing beam splitter is used in the polarization separating portion, disadvantages such as the aforementioned difficult optical adjustment and reverse direction propagating light can be overcome. However, a tolerance of a parameter is narrow in fabricating such as optical fiber type polarizing beam splitter. For these reasons, the number of polarization separating portions is desired to be decreased down to a minimum number.

Accordingly, it is an object of the invention to provide a polarization diversity optical receiving apparatus in which the number of polarization separating portions is decreased down to a minimum number.

It is a further object of the invention to provide a polarization diversity optical receiving apparatus which has a simplified construction.

It is a still further object of the invention to provide a polarization diversity optical receiving apparatus which is less affected by light propagated in the reverse direction.

According to the invention, a polarization diversity optical receiving apparatus comprises
a polarizationseparating means for dividing signal light into first and second signal lights having polarizations othogonal to each other,
an optical dividing means for dividing local oscillation light into first and second local oscillation lights, polarizations of said first and second local oscillation lights coinciding with those of said first and second signal lights correspondingly,
a first balanced receiver for receiving said first signal light and said first local oscillation light to produce first intermediate frequency signal,

a second balanced receiver for receiving said second signal light and said second local oscillation light to produce second intermediate frequency signal, and
a combining and dimodulating circuit for receiving said first and second intermediate frequency signals to produce baseband signal.

The invention will be described in more detail in conjunction with appended drawings wherein,

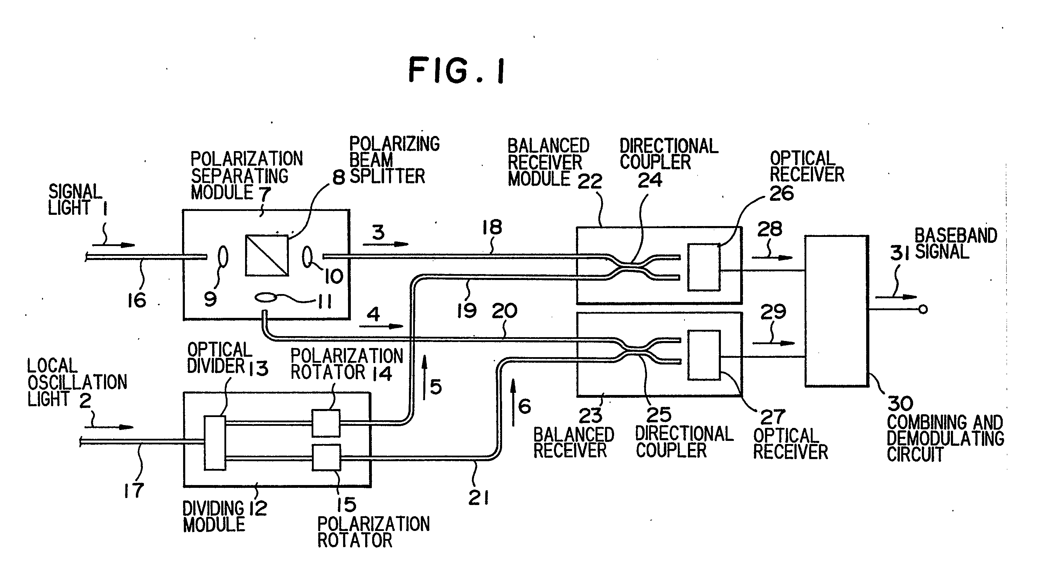

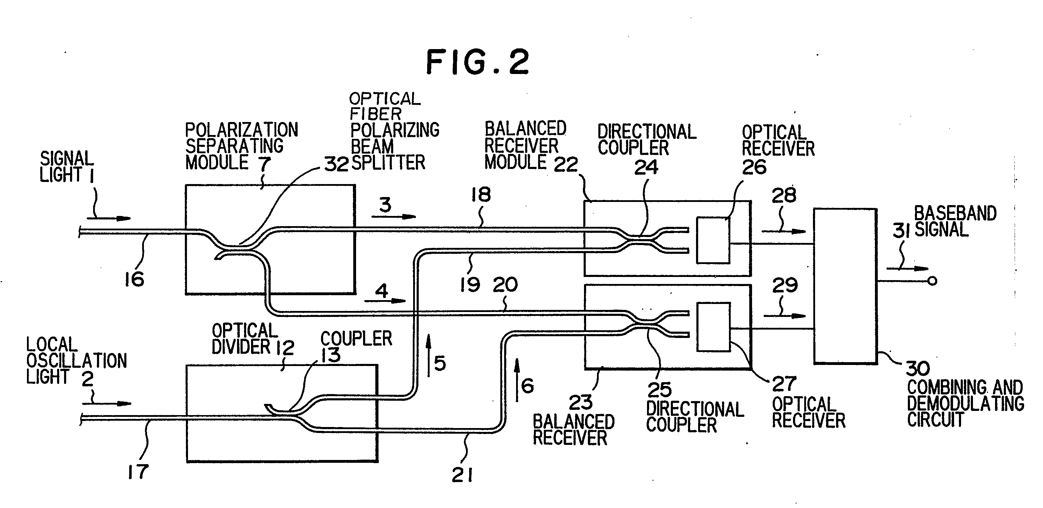

Figs. 1 and 2 are explanatory diagrams showing polarization diversity optical receiving apparatus in first and second embodiments according to the invention.

Fig. 1 shows a polarization diversity optical receiving apparatus in a first embodiment according to the invention wherein a polarizing beam splitter 8 is used in a polarization separating portion. In the polarization diversity optical receiving apparatus, signal light 1 propagated through an optical fiber 16 is supplied to a signal light polarization separating module 7 in which the signal light 1 is collimated by a lens 9. The collimated signal light 1 is divided in a polarization beam splitter 8 into first and second signal lights 3 and 4 having polarizations orthogonal to each other. The first and second signal lights 3 and 4 are focused on corresponding end surfaces of single mode optical fibers 18 and 20 by lenses 10 and 11. On the other hand, local oscillation light 2 propagated through a single mode optical fiber 17 is supplied to a local oscillation light dividing module 12 in which the local oscillation light 2 is divided in an optical divider 13 into first and second local oscillation lights 5 and 6. The first local oscillation light 5 is rotated in its polarization by a polarization rotator 14, so that polarizations of the first signal light 3 and the first local oscillation light 5 are coincided with each other , and the lights 3 and 5 are then transmitted through the single mode optical fiber 18 and a single mode optical fiber 20 to be supplied to a first balanced receiver module 22. In the same manner, the second local oscillation light 6 is rotated in its polarization by a polarization rotator 15, and the second signal and local oscillation lights 4 and 6 are supplied through the single mode optical fiber 20 and a single mode optical fiber 21 to a second balanced receiver module 23.

In the first balanced receiver module 22, the first signal and local oscillation lights 3 and 5 are combined in an optical directional coupler 24, two outputs of which are optically coupled to an optical receiver 28. The optical receiver 28 comprises two photodiodes for receiving output lights of the optical directional coupler 24 to produce two electric signals, and a circuit for differentially combining the two electric signals to produce a first intermediate frequency signal 28. The second balanced receiver module 23 comprises an optical directional coupler 25 and an optical receiver 27, so that a second intermediate frequency signal 29 is obtained therein in the same processing of the second signal and local oscillation lights 4 and 6 as that in the first balanced receiver module 22. The first and second intermediate frequency signals 28 and 29 are supplied to a combining and demodulating circuit 30 in which a baseband signal 31 is obtained. Details of combining and demodulating two intermediate frequency signals in a polarization diversity optical heterodyne receiving apparatus are described on pages 57 to 63 of "a system research conference material CS 83-22 entitled Polarization - diversity receiver for heterodyne/coherent optical fiber communications' by T. Okoshi et al. in the Institute of electronics, informations and communications engineers", and on pages 274 to 276 of "Journal of Lightwave Technology, Vol. LT-5, No. 2, February 1987" as entitled "Polarization Independent Coherent Optical Receiver" by B. Glance.

In the first embodiment, the single mode optical fibers 17, 18, 19, 20 and 21 may be replaced by polarization maintaining optical fibers, respectively. In such a case, the polarization rotators 14 and 15 are not necessary to be provided, if the polarization maintaining fibers used in place of the single mode optical fibers 18 and 19, and those used in place of the single mode optical fibers 20 and 21 are relatively rotated on light axes, respectively, so that polarizations of the first signal and local oscillation lights 3 and 4, and those of the second signal and local oscillation lights 5 and 6 are coincided with each other. Furthermore, the stabilization of the polarization diversity optical receiving apparatus is enhanced, if polarization maintaining optical fibers are used in place of the optical fiber 17 for connecting a local oscillation light source to the local oscillation light dividing module 12, and the optical fibers 18, 19, 20 and 21 for connecting the signal light polarization separating module 7 and the local oscillation light dividing module 12 to the first and second directional couplers 24 and 25, respectively, and if polarization maintaining optical fiber couplers are used for the optical divider 13, and the optical directional couplers 24 and 25, respectively.

Fig. 2 shows a polarization diversity optical receiving apparatus in a second embodiment according to the invention wherein an optical fiber type polarizing beam splitter 32 is used in the signal light polarization separating module 7, polarization maintaining optical fiber couplers are used for the optical coupler 13, and for the optical directional couplers 24 and 25, and polarization maintaining optical fibers are used for the optical fibers 18, 19, 20 and 21. In the second embodiment, polarizations of the first signal and local oscillation lights 3 and 5, and those of the second signal and local oscillation lights 4 and 6 are coincided with each other, respectively, in accordance with relative rotations of the polarization maintaining optical fibers 18 and 19, and those of the polarization maintaining optical fibers 20 and 21.

In the second embodiment, the polarization maintaining optical fiber coupler 13 may be replaced by an optical fiber type polarizing beam splitter which is described, for instance, on pages 19 to 24 of "Technology and research reports, OQE 85-15(1985) of the Institute of electronics, informations and communications engineers" as entitled "Fiber-optic polarizing beam splitter" by I. Yokohama. Further, a polarization maintaining optical fiber coupler is described on pages 23 to 30 of "Technology and research reports, OQE 83-81-(1983) of the Institute of electronics, informations and communications engineers" as entitled "polarization-maintaining single-mode-fiber coupler" by M. Kawachi.

Although the invention has been described with respect to specific embodiment for complete and clear disclosure, the appended claims are not to thus limited but are to be construed as embodying all modification and alternative constructions that may occur to one skilled in the art which fairly fall within the basic teaching herein set forth.

## Claims

1. A polarization diversity optical receiving apparatus comprising,
a polarization separating means for dividing signal light into first and second signal lights having polarizations orthogonal to each other,
an optical dividing means for dividing local oscillation light into first and second local oscillation lights, polarizations of said first and second local oscillation lights coinciding with those of said first and second signal lights correspondingly,
a first balanced receiver for receiving said first signal light and said first local oscillation light to produce first intermediate frequency signal,
a second balanced receiver for receiving said second signal light and said second local oscillation light to produce second intermediate frequency signal, and
a combining and demodulating circuit for receiving said first and second intermediate frequency signals to produce baseband signal.

2. A polarization diversity optical receiving apparatus according to claim 1,
wherein said first and second balanced receivers each include an optical directional coupler for receiving a corresponding one of said first and second signal lights and a corresponding one of said first and second local oscillation lights to produce two output lights, and a differentially combining circuit for receiving said two output lights to produce a corresponding one of said first and second intermediate frequency signals.

3. A polarization diversity optical receiving apparatus according to claim 1 or 2,
wherein said polarization separating means includes one selected from a polarizing beam splitter and an optical fiber type polarizing beam splitter.

4. A polarization diversity optical receiving apparatus according to claims 1 to 3,
wherein said optical dividing means includes an optical divider having an input and two outputs, and two polarization rotators coupled to said two outputs of said optical divider.

5. A polarization diversity optical receiving apparatus according to claim 1,
wherein said optical dividing means includes an optical coupler having an input and two outputs, and two optical fibers coupled to said two outputs of said optical coupler, polarizations of said two optical fibers being relatively adjusted to those of two optical fibers for said first and second signal lights.

6. A polarization diversity optical receiving apparatus according to claim 2,
wherein said differentially combining circuit includes two photodetectors for converting said two output lights to two electric signals, and a circuit for differentially combining said two electric signals to produce a corresponding one of said first and second intermediate frequency signals.

# FIG. 1

EP 0 322 893 A2

# FIG.2

EP 0 322 893 A2